**Europäisches Patentamt**

**European Patent Office**

**Office européen des brevets**

(19)

(11) **EP 1 106 981 A2**

(12) **EUROPEAN PATENT APPLICATION**

(43) Date of publication:
 **13.06.2001 Bulletin 2001/24**

(51) Int Cl.[7]: **G01L 1/00**

(21) Application number: **00310888.3**

(22) Date of filing: **07.12.2000**

(84) Designated Contracting States:
 **AT BE CH CY DE DK ES FI FR GB GR IE IT LI LU MC NL PT SE TR**
 Designated Extension States:
 **AL LT LV MK RO SI**

(30) Priority: **09.12.1999 US 457840**

(71) Applicant: **Texas Instruments Incorporated Dallas, Texas 75251 (US)**

(72) Inventor: **Kalisvaart, Adri C.**
 **Lincoln, RI 02865 (US)**

(74) Representative: **Critten, Matthew Peter et al Abel & Imray,**
 **20 Red Lion Street**
 **London, WC1R 4PQ (GB)**

(54) **Capacitive transducer**

(57) A calibratable capacitive conditioning integrated circuit (12) used with an external sensing element ($C_{VAR}$) of the variable capacitance type converts small changes in sensor capacitance caused by a change in a mechanical stimulus such as pressure or acceleration, to large changes in output voltage. The output voltage is fed to an electronic control unit (14) in an automobile or the like which contains an analog-to-digital converter which converts the output voltage into a digital word for further processing by the electronic control unit. A reference capacitor ($C_{REF}$) is connected to the variable capacitor at a common detect node of the integrated circuit which is coupled to an input buffer having an output voltage ($V_F$) which in turn is connected to a coarse bias and gain stage (30) and a fine bias stage (32).

FIG 3

## Description

Field of the Invention

This application relates generally to sensors having variable capacitors as sensing elements and more particularly to signal conditioning electronics for providing an improved linear output voltage which varies in response to a mechanical stimulus applied to the capacitive sensing elements.

Background of the Invention

Signal conditioning circuits of this type are shown and described in U.S. Patent Nos. 4,982,351 and 5,770,802, assigned to the assignee of the present invention, the disclosures of which are incorporated herein by this reference. In the former patent, a condition responsive element such as a capacitive pressure transducer (variable capacitor) having a pressure responsive diaphragm for varying transducer capacitance within a selected range in response to variations in pressure force applied to the diaphragm is shown connected to a reference capacitor in a charge locked loop relation having a common node for forming a capacitance to voltage converter circuit which is ratiometric with respect to supply voltage to vary output voltage within a selected range in response to variation in variable capacitance in a corresponding range. An array of switches cycles the voltage across the variable and reference capacitors with opposite transitions with a predetermined frequency so that change in transducer capacitance results in a differential voltage at the common node. That voltage is then amplified to drive a current source-sink feedback path, to restore a balanced condition at the node, thereby to maintain the sensor output voltage as a function of the transducer capacitance.

In the latter patent, a variable capacitor, whose capacitance varies in response to the application of a mechanical stimulus, is also connected to a reference capacitor to form a common node which is coupled to a charge comparator which in turn is connected to a current stage. The output of the voltage to current stage is connected through a phase switch controlled by a timing and logic circuit to an integrator buffer and an integrating capacitor. The output of the integrator buffer is connected to an output amplifier and to an analog feedback network through a phase switch to the variable capacitor. At the commencement of an instruction cycle, a phase switch connected across the charge comparator opens to enable the charge comparator. These phase switches, connecting the reference capacitor to a gain voltage and the variable capacitor to a bias voltage, are opened and phase switches, which connect the reference capacitor to the supply voltage and the variable capacitor to the analog feedback, are closed to switch the voltages across the reference and variable capacitors and induce a net charge at the common or detect node. At steady state conditions any net change at this node represents an error charge which is converted to a voltage through the comparator and to a current at the voltage to current stage. After a short settling time period a phase switch connected to the output of the voltage to current stage is closed so that the current is connected to the integrating capacitor and is converted back to a voltage on the output of the integrator buffer which is of the opposite polarity to the net error charge on the detect node. This voltage is fed back to the variable capacitor to null out the error charge. The latter phase switch is then opened and the other phase switches returned to their previous states of energization in preparation for the next cycle.

Summary of the Invention

It is an object of the present invention to provide a signal conditioning circuit which is even more accurate and has higher speed than is provided in the above noted prior art approaches. Another object of the invention is the provision of a condition responsive capacitive transducer having improved low cost, high accuracy signal conditioning electronics.

According to the invention, there is provided a variable capacitive transducer comprising:

a variable capacitor for providing an electrical signal responsive to the application of a mechanical stimulus being monitored and a reference capacitor connected to the variable capacitor to form a detect node;

an electric circuit comprising an input buffer having a positive input, a negative input and an output, the detect node being connected to a phase B switch, which is switchable between a first configuration, in which the detect node is connected to the negative input and a second configuration, in which the detect node is connected to the positive input, and an integrating capacitor connected to the positive input;

the reference capacitor being connected to a first phase A switch, which is switchable between a first configuration in which the reference capacitor is connected to a first reference voltage and a second configuration, in which the reference capacitor is connected to a second reference voltage;

the variable capacitor being connected to a second phase A switch, which is switchable between a first position, in which the variable capacitor is connected to the output of the input buffer and a second position, in which the variable capacitor is connected to a third reference voltage; and

a logic circuit for providing instructional cycles and connected to the respective phase switches to control the configuration of the phase switches so that for a first charge reference portion of each instructional cycle, phase A and phase B switches are in their respective first configurations, for a second charge redistribution portion of each instructional cycle the phase A switches are in their respective second configurations and for a third charge integration portion of each cycle the phase B switch is in its second configuration.

Preferably, the first reference voltage is analog ground. Preferably, the third reference voltage is analog ground.

Preferably, the phase B switch is a single-pole, double-throw switch, which has a normally closed contact connected to the negative input and a normally open contact connected to the positive input. Preferably, the first phase A switch is a single-pole, double-throw switch, which has a normally closed contact connected to the first reference voltage and a normally open contact connected to the second reference voltage. Preferably, the second phase A switch is a single-pole, double-throw switch, which has a normally closed contact connected to the output of the input buffer and a normally open contact connected to the third reference voltage.

The variable capacitive transducer may further comprise an integrating resistor connected to the positive input of the input buffer.

Preferably, the variable capacitive transducer further comprises a bias and gain stage having an amplifier having a positive and a negative input and an output, means for providing controllable gain coupled between the output of the input buffer and the negative input and means for providing controllable bias coupled between a power supply voltage and the positive input of the bias and gain stage amplifier. Preferably, the gain increases exponentially with a linear increase in a control signal. Preferably, the bias increases linearly with a linear increase in a control signal. The means for providing controllable gain and/or the means for providing controllable bias may comprise a digital-to-analog converter. Thus, the means for providing controllable gain, for example, may comprise a potential divider having a plurality of taps, the negative input of the amplifier being connected to one of the taps, which one being determined by a digital control signal. The gain when the negative input is connected to the $n^{th}$ tap may be given by a constant raised to the power n; that would provide an example of an exponential increase in gain with a linear increase in control signal, as referred to above. Preferably, the gain of the gain stage is from 1.0 to 9.3 with a resolution at the output voltage of the gain stage from 0.6% to 2.8% of the supply voltage.

Preferably, the variable capacitive transducer further comprises a fine bias and gain stage having an amplifier having a positive and a negative input and an output, means for providing controllable fine gain coupled between the output of the coarse bias and gain stage amplifier and the negative input of the fine bias and gain stage amplifier and means for providing controllable fine bias coupled between the power supply voltage and the negative input of the fine bias and gain stage amplifier and a reference voltage coupled to the positive input of the fine bias and gain amplifier. The means for providing controllable fine gain and/or the means for providing controllable fine bias may comprise a digital-to-analog converter. Preferably, the resolution of the fine bias stage reduces an output voltage of the bias stage of 2.8% of the supply voltage to approximately 0.1%.

In an embodiment of the invention, the variable capacitive transducer comprises a variable capacitor for providing an electrical signal responsive to the application of a mechanical stimulus being monitored and a reference capacitor connected to the variable capacitor to form a detect node

   an electric circuit comprising an input buffer having a positive and a negative input and an output, the detect node being connected to a phase B single pole, double throw switch which has a normally closed contact connected to the negative input and a normally open contact connected to the positive input, an integrating resistor and capacitor connected to the positive input,
   the reference capacitor connected to a first phase A single pole, double throw switch having a normally closed contact connected to analog ground and a normally open contact connected to a reference voltage,
   the variable capacitor connected to a second phase A single pole, double throw switch having a normally closed contact connected to the output of the input buffer and a normally open contact connected to analog ground,
   a logic circuit for providing instructional cycles and connected to respective phase switches to control the state of energization of the phase switches so that for a first charge reference portion of each instructional cycle, phase A and phase B switches are in the normally closed position, for a second charge redistribution portion of each instructional cycle the phase A switches close the normally open contacts and for a third charge integration portion of each cycle the phase B switch closes the normally open contact.

The variable capacitive transducer of that embodiment may further comprise a coarse bias and gain stage having an amplifier having a positive and a negative input and an output, an exponential gain DAC coupled between the output of the input buffer and the negative input and a linear bias DAC coupled between a power supply voltage and the positive input of the coarse bias and gain stage amplifier.

The variable capacitive transducer of that embodiment may further comprise a fine bias and gain stage having an amplifier having a positive and a negative input and an output, a fine gain DAC coupled between the output of the coarse bias and gain stage amplifier and the negative input of the fine bias and gain stage amplifier and a fine bias DAC coupled between the power supply voltage and the negative input of the fine bias and gain stage amplifier and a reference voltage coupled to the positive input of the fine bias and gain amplifier.

The gain of the coarse adjust stage may be from 1.0 to 9.3 with a resolution at the output voltage of the coarse adjust stage from 0.6% to 2.8% of the supply voltage.

The resolution of the fine bias adjust stage may reduce an output voltage of the coarse adjust stage of 2.8% of the supply voltage to approximately 0.1%.

Thus, briefly described, in an embodiment of the invention, a variable capacitor, whose capacitance varies in response to the application of a mechanical stimulus, such as pressure or acceleration, is connected to a reference capacitor to form a common or detect node which is coupled respectively to the output and positive inputs of a unity gain input buffer through a single pole, double throw (SPDT) $\phi$B switch. A capacitor is connected to the positive input of the input buffer. The reference capacitor is coupled respectively to analog ground and to a reference voltage $V_{REF}$ through a SPDT $\phi$A switch and the variable capacitor is coupled respectively to the output $V_F$ of the input buffer and to analog ground through another SPDT $\phi$A switch. The output $V_F$ of the input buffer is connected to a bias network, which in turn, is connected to a gain network and finally to an output amplifier to provide an output voltage which is fed to the electronic control unit, for example, of an automobile. The phase switches $\phi$A and $\phi$B are cycled through three distinct phases during one sample cycle. These phases are charge reference phase, charge redistribution phase and error voltage integrating phase.

During the charge reference phase, switches $\phi$A and $\phi$B are in the normally closed position with the reference capacitor connected to analog ground and the variable or sensor capacitor shorted to the output $V_F$ of the input buffer. At the end of the charge reference phase, the $\phi$A and $\phi$B switches open and the open positions of the $\phi$A switches close. At the end of the charge integrating phase, $\phi$B switch changes to close the normally open position. The integrating capacitor is charged at this stage depending on the voltage difference between the voltage $V_F$ and the voltage at the detect node. During a stimulus applied to the sensing element, the input stage buffer has an output voltage error which is reduced exponentially in successive sample cycles. According to a feature of the invention, when used with a pressure sensor, an offset, or bias, and a gain stage are provided to level shift and amplify the buffer stage output $V_F$ so that the output voltage of the circuit swings from $V_{SS}$ to $V_{DD}$ when the pressure or the sensor goes from 0 to a maximum. According to another feature of the invention, fault detection circuits are provided which indicate fault conditions by forcing the output voltage outside its normal range of operation.

Brief Description of the Drawings

Other objects, advantages and details of the novel and improved sensor of the invention appear in the following detailed description of the preferred embodiment of the invention, the detailed description referring to the drawings in which:

Fig. 1 is a functional diagram of an automobile pressure or acceleration sensor system comprising a variable capacitor, a reference capacitor, an integrated circuit and an electronic control unit incorporating the invention,

Fig. 2 is a plot of output voltage $V_{OUT}$ vs. mechanical stimulus of the Fig. 1 sensor following calibration,

Fig. 3 is similar to Fig. 1 but shows the functional portions of the integrated circuit portion 12 of the sensor system,

Fig. 4 is a timing diagram for the integrated circuit of Fig. 1,

Fig. 5 is a plot of voltage change across capacitor $C_{int}$ vs. sample cycles of circuit 12 made in accordance with the invention,

Fig. 6 is a block diagram of a plug progammable calibrated capacitive conditioner integrated circuit made in accordance with the invention,

Fig. 7 is a schematic of the coarse gain and bias adjust stage 30 of Fig. 6,

Fig. 8 is a schematic of the bias and gain fine adjust stage 32 of Fig. 6,

Fig. 9 is a schematic of a temperature compensation circuit of Fig. 6, and

Fig. 10 is a schematic similar to Fig. 1 of a system made in accordance with the invention shown in a typical operating configuration.

Description of the Preferred Embodiments

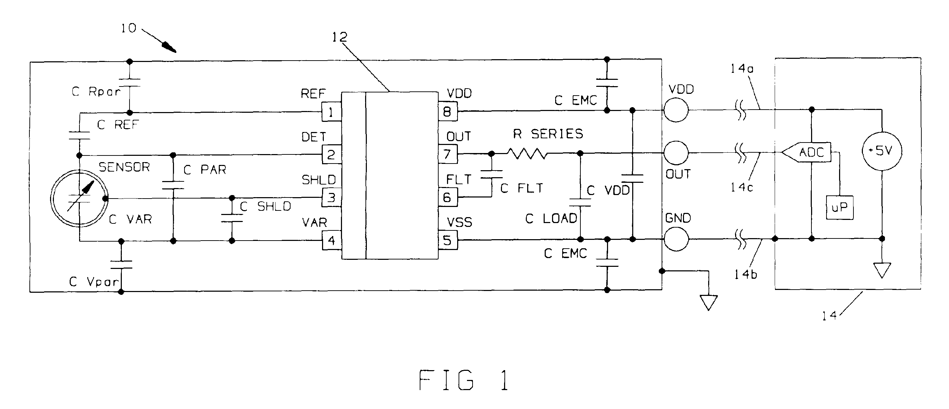

With reference to Fig. 1, the package of an integrated circuit 12 made in accordance with the invention includes eight pins comprising a reference capacitor drive pin 1 (REF), an input signal detect pin 2 (DET), a guard or shield connection pin 3 (SHLD), a sensor (variable) capacitor drive pin 4 (VAR), a power supply or $V_{dd}$ connection 8 (VDD), an output voltage pin 7 (OUT), a low pass filter capacitor pin 6 (FLT) and a ground or Vss pin 5 (VSS). Used as a pressure or acceleration transducer, a sensor 10 made in accordance with the invention includes a variable capacitor $C_{VAR}$ and reference capacitor $C_{REF}$ connected to pins 4 and 1 respectively and to a common connection at pin 2. The output of circuit 12 is connected at pin 7, through various filter capacitors to be discussed infra, to electronic control unit (ECU) 14 with a +5 volt supply 14a and a ground 14b connected between unit 14 and pins 8 and 5, respectively. Parasitic capacitors $C_{Rpar}$ and $C_{Vpar}$, $C_{Par}$ and EMC capacitors $C_{EMC}$ are shown for a typical application along with a shield capacitor $C_{SHLD}$, load capacitor $C_{LOAD}$, supply voltage capacitor $C_{VDD}$ and filter capacitor $C_{FLT}$ and $R_{SERIES}$ resistors.

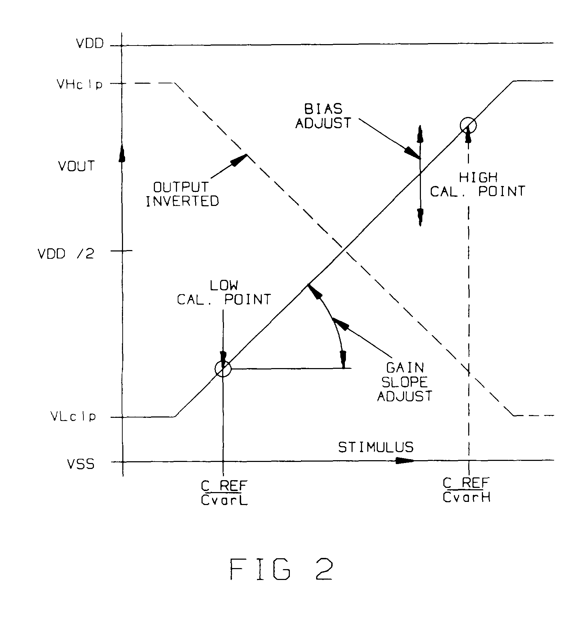

The Fig. 1 system includes an offset stage 18 and gain stage 20 to level shift and amplify the buffer stage output voltage $V_F$ so that the output voltage of circuit 12 swings from $V_{SS}$ to $V_{DD}$ when the pressure on the sensor goes from 0 to maximum. The system provides for adjustment of bias and the amplification factor gain over a wide range as indicated in the transducer output voltage versus stimulus graph shown in Fig. 2 with the bias adjusted between $V_{Hclp}$ and $V_{Lclp}$ clamped voltages and the gain slope adjusted providing a low calibration point at $C_{ref}/C_{varL}$ and a high calibration point at $C_{ref}/C_{varH}$. Another optional feature provided in the system is an inverted output as indicated in dashed lines in the graph.

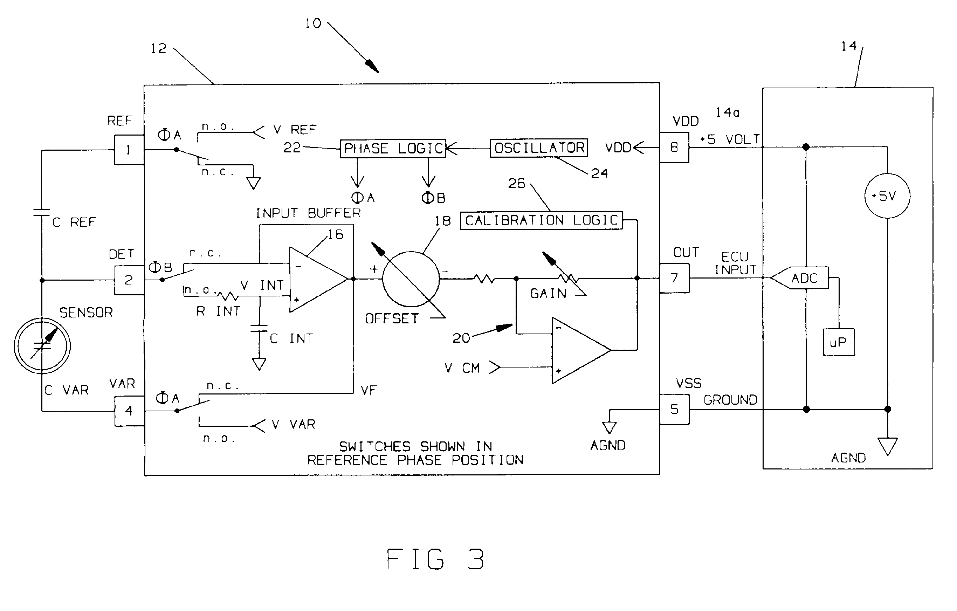

With reference to Fig. 3, integrated circuit 12 comprises first and second single pole, double throw (SPDT) phase switches, φA and a SPDT phase switch φB. The phase φB switch is coupled to an input buffer 16 having a negative input connected to the normally closed position of φB switch, $φB_{nc}$ and a positive input connected to the normally open position of φB switch $φB_{no}$. An integrating resistor $R_{int}$, although not necessary, is shown connected between the normally open position $φB_{no}$ and the positive input of input buffer 16 and an integrating capacitor $C_{int}$ is connected between the positive input and analog ground. The output $V_F$ of input buffer 16 is connected to its negative input and to the normally closed position $φA_{nc}$ of a phase switch φA at the variable node 4. The normally open position $φA_{no}$ of the phase switch φA is connected to $V_{VAR}$. The other phase switch φA is connected to the reference node 1 with its normally closed position $φA_{nc}$ connected to analog ground and its normally open position $φA_{no}$ connected to $V_{REF}$. The output $V_F$ is connected to a bias section 18 and in turn to a gain section 20. A phase logic section 22 having an oscillator 24 provides pulses to control the positions of the phase switches φA, φB. Calibration of the circuit is provided by section 26.

The output voltage of the sensor circuit is fed to the electronic control unit 14 of an automobile or the like. Unit 14 contains the +5V volt supply and an analog-to-digital converter which converts the output voltage into a digital word for further processing by the microprocessor "μP" of the unit 14, thereby maintaining accuracy regardless of the supply voltage.

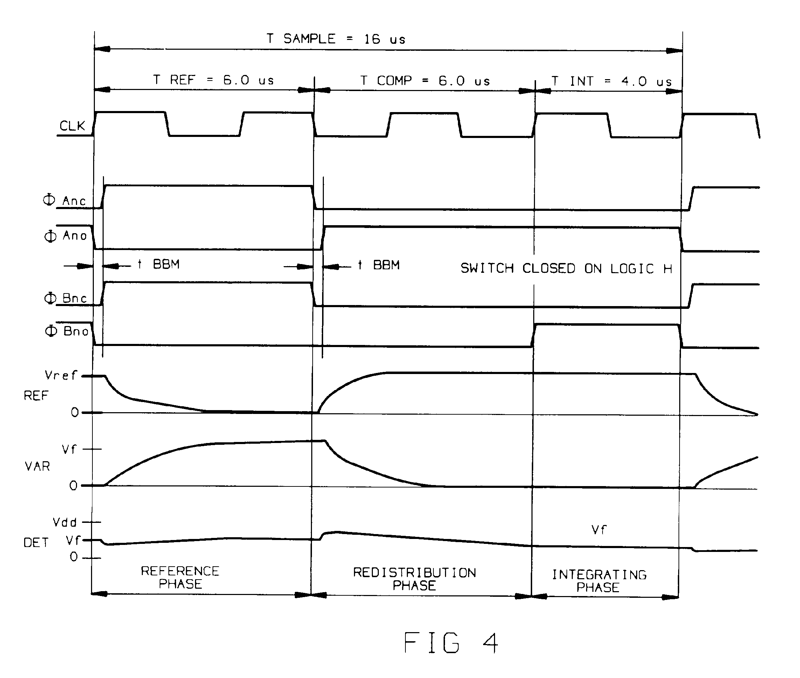

Calibration of an assembled sensor is effected through three connections, supply 8 (VDD), output 7 (OUT) and analog ground 5 (VSS), to be discussed below. The phase switches φA and φB are cycled through three distinct phases during one sample cycle, viz., the charge reference phase, the charge redistribution phase and the error voltage integrating phase, shown in Fig. 4 along with the voltages at the reference (REF), detect (DET) and variable (VAR) pins.

During the charge reference phase the SPDT switches φA and φB are in the normally closed (nc) position, as shown in Fig. 3. In the nc position the reference capacitor $C_{REF}$ is connected to analog ground VSS and sensor capacitor $C_{VAR}$ is shorted to $V_F$. The charge reference phase is selected to be sufficiently long for the $C_{REF}$ and $C_{VAR}$ voltages to settle before entering the charge distribution phase. The switches $φA_{nc}$ and $φB_{nc}$ open at the end of the charge reference phase and the two $φA_{no}$ switches close. The φA switches are break-before-make switches in order to prevent loss of reference charge on capacitors $C_{REF}$ and $C_{VAR}$. For the same reason, all the switches are selected to be of low leakage and are switching charge compensated in order to prevent errors at the detect node (DET). The switch $φB_{no}$ stays open for the duration of the charge redistribution phase. At the end of this phase the switch $φB_{no}$ closes so that the integrating capacitor $C_{int}$ is then charged depending on the voltage difference between voltage $V_F$ and the voltage at the detect (DET) node.

The transfer equation, derived from the steady state operating condition where the value of the sensor capacitance $C_{VAR}$ remains constant after the sensor has been running for many sample cycles is:

$$V_F = V_{var} + V_{REF} * C_{REF}/C_{VAR}$$

The values of the sensor capacitor can be expressed in the mechanical dimensions of the sensor. When a mechanical force causes the sensor membrane plate to be deflected over the distance d, the value of capacitor $C_{VAR}$ is as follows.

$$C_{VAR} = \in_O * Aeff / (D-d)$$

Where

| | |
|---|---|
| $\in_O$ = | permitivity of free space (8.854 pF/m) |
| Aeff = | the effective sensor capacitance plate area ($m^2$) |
| D = | the distance between the sensor capacitor plates when no pressure or force is applied (m) |
| D-d = | = the effective distance between the capacitor plates when pressure or force is applied (m) |
| $C_{VAR}0$ = | $C_{VAR}$ at d = 0 |

Substituting and rearranging shows that for charge balance the buffer output voltage must be:

$$V_F = V_{VAR} + V_{REF} * C_{REF}/C_{VAR} \, 0 * (1 - d/D)$$

From the above, it can be seen that $V_F$ is linear with respect to displacement d of the variable capacitor. Thus, the relationship between d and the mechanical force must also be linear for the capacitive sensor. Since the ratio for typical capacitive sensors can be from 7% to 40%, voltage $V_F$ is amplified and level shifted by sections 18, 20, to be discussed.

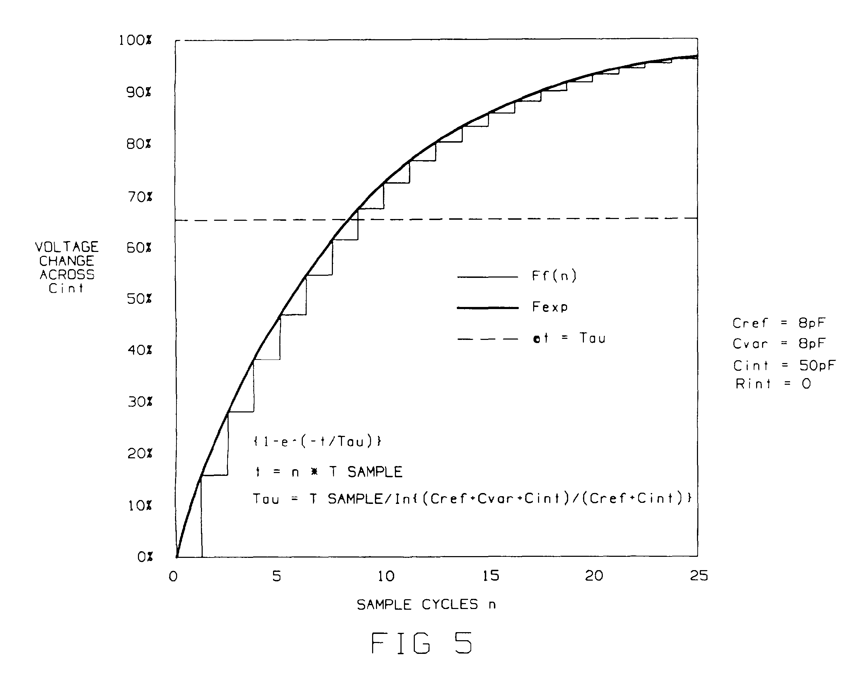

Each sample cycle reduces the error from a previous cycle by the ratio of the capacitors $C_{VAR}$ to $(C_{REF} + C_{VAR} + C_{int})$. For one example where $C_{REF} = C_{VAR} = 8pF$ and $C_{int} = 50pF$ it takes 7.7 samples for $V_F$ to reach 63%of its value as shown in Fig. 5. The frequency response can be modified by changing the value of the integrating capacitor $C_{int}$, that is, in a finished integrated circuit the frequency response can be reduced by adding an external capacitor between the detect pin (DET) and the analog ground pin (VSS). Further, the transient response or band width of the input stage is affected by resistor $R_{int}$

Error caused by the amplifier offset voltage and detect node leakage current becomes relatively smaller if the voltage difference between $V_{REF}$ and $V_{VAR}$ is increased with the largest possible difference occurring when $V_{VAR} = V_{SS}$ and $V_{REF} = V_{DD}$. The practical limit of the $C_{REF}/C_{VAR}$ ratio is between 0.3 and 1.

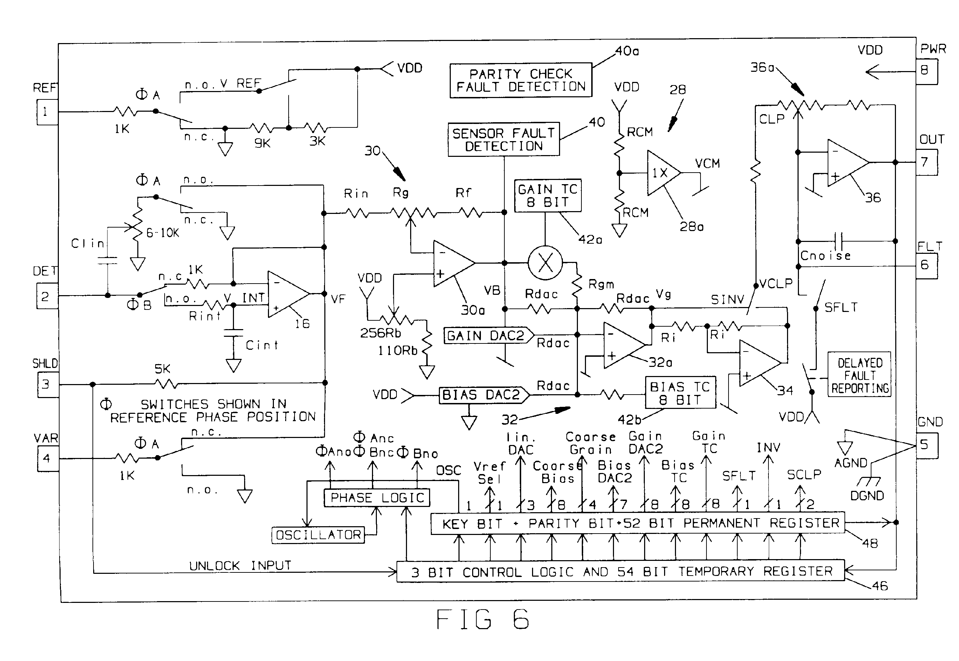

With particular reference to Fig. 6, the input stage providing voltage $V_F$ functions as described above with reference to Fig. 3.

As noted above, the signal $V_F$ from the input stage needs bias and gain adjustments. The adjustment ranges are so large that these functions are distributed over two stages, namely, a coarse adjust bias and gain stage and a fine bias and gain stage. The invert/non-invert stage allows the selection of the output voltage polarity. Its output voltage $V_{CLP}$ covers the $V_{SS}$ to $V_{DD}$ range. The output amplifier has a gain of 1 or less in order to select the output voltage range. Fault detection circuits report faults by forcing the output voltage outside its normal range of operation.

Integrated circuit 12 functions as a sampled system, as noted above. The timing signals $\phi A$ and $\phi B$ are generated internally and are derived from on-chip oscillator 24. In their high and low states, these signals will close and open their respective switches. The oscillator frequency, from which the timing signals are derived, is selected to be as low as possible to reduce EMC susceptibility. EMC suppression filters, as seen in Fig. 1, may be employed in the supply line to the oscillator section.

The SPDT switches $\phi A$ and $\phi B$ must be break-before-make switches in order to prevent reference charge loss and to prevent excessive cross-over current spikes. The timing diagram of Fig. 4 shows that for the duration $t_{BBM}$ both switches $\phi A_{nc}$ and $A_{no}$ and $B_{nc}$ and $B_{no}$ are off. The switches $\phi B_{nc}$ and $\phi A_{nc}$ must also break-before-make in order to prevent unwanted charge injection on capacitor $C_{int}$.

The input stage comprises phase switches $\phi A$ and $\phi B$, the integrating network resistor $R_{int}$ and capacitor $C_{int}$ and the unity-gain buffer 16. An important function of input stage buffer 16 is to supply a source current spike to charge the sensor capacitor $C_{VAR}$ and the parasitic capacitor $C_{VPAR}$ at the VAR node 4. These currents are turned on by the nc switches of $\phi A$ and $\phi B$ at the beginning of the reference phase.

All amplifiers in integrated circuit 12 are referenced to an internal common mode voltage. In Fig. 6 this voltage is set to $V_{DD}/2$ by means of the voltage divider with resistors $R_{CM}$. This voltage is buffered by means of a unity gain amplifier 28a.

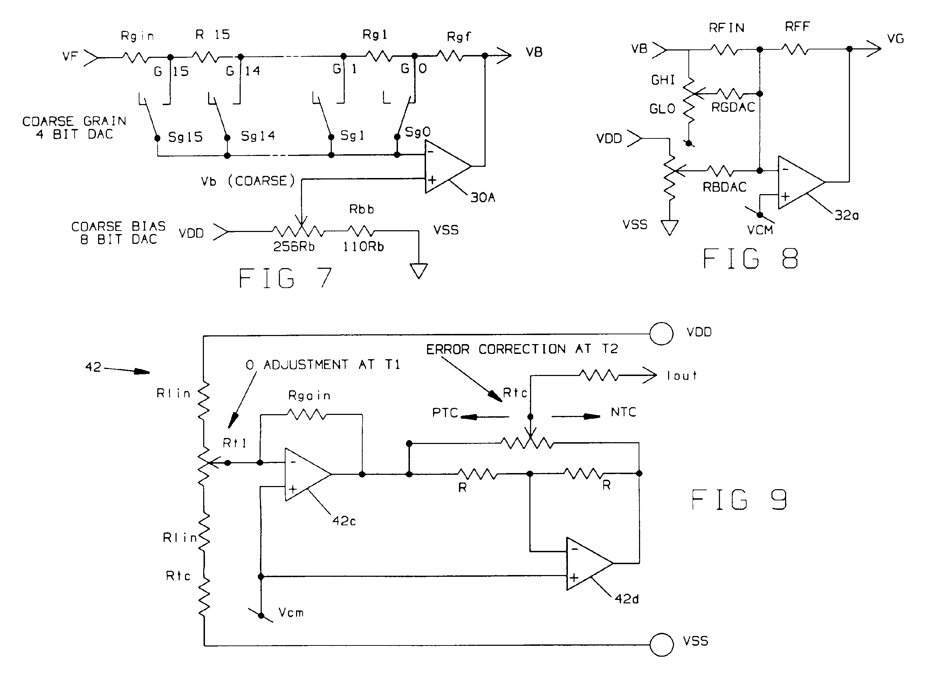

As seen in Figs. 6, 7, coarse bias and gain stage 30 includes an exponential potentiometric 4 bit gain DAC including resists $R_{in}$, $R_g$ and $R_f$ adjustably connected to the negative input of amplifier 30a and an 8 bit potentiometric bias DAC1 including resistors 256 Rb and 110 Rb adjustably connected to the positive input of amplifier 30a. The output $V_B$ of amplifier 30a is connected to resistor $R_f$, to sensor fault detection section 40, to be discussed, and to a temperature compensating network 42a, to be discussed, whose output is connected through resistor Rgm to the negative input of fine bias and gain stage amplifier 32a. As seen in Figs. 6, 8, output $V_B$ is connected to gain DAC2 whose output $R_{dac}$ is connected to the negative input of amplifier 32a along with the output of bias DAC2 and temperature compensating network 42b, to be discussed. Output $V_B$ is also connected to the negative input of amplifier 32a through 0.333 $R_{dac}$ and the output $V_G$ of amplifier 32a is fed back to the negative input through resistor 0.8333 $R_{dac}$. The output $V_G$ of amplifier 32a is connected to the negative input of non-invert/invert stage amplifier 34 through a resistor Ri and with the output of the amplifier fed back to its negative input through another resistor Ri. Switch $S_{INV}$ is used to switch the output $V_{CLP}$ from amplifier 32a, shown in a default position, which provides output voltage which increases with increasing transducer capacitance $C_{VAR}$, i.e., with increasing sensed pressure to an alternate position which causes the output voltage to decrease with increasing value of the transducer capacitance $C_{VAR}$.

The voltage $V_{CLP}$ is the input voltage for the output amplifier 36. The gain of the output stage is programmable in order to provide programmable output voltage clamping levels. Limiting the output voltage span results in the formation of forbidden output voltage bands just above $V_{SS}$ and just below $V_{DD}$ which can be used to report failures to the electronic control unit. A two bit DAC 36a is provided for controlling four spans with a default position of 100% for no clamping. An external filter capacitor can be added between the output and filter nodes 7 (OUT) and 6 (FLT) in order to limit

bandwidth. Capacitor $C_{noise}$ limits the bandwidth to approximately 25k Hz which attenuates sample frequency noise at the output.

The calibrated variable-capacitance sensor, as well as the circuit 12, may be temperature dependent. Fig. 9 shows a temperature compensation circuit which may be used to correct for thermal error. The bias and gain calibration of the assembled sensor is conducted at room temperature T1. Temperature compensation calibration is performed at a different temperature T2. The network 42, shown in the figure, permits this without affecting the T1 calibration. The network includes a gain amplifier 42c whose negative input is connected to adjustable resistor $R_{t1}$ which is connected between resistors $R_{lin}$ and $V_{dd}$ and $R_{lin}$ and temperature dependent resistors $R_{tc}$ and $V_{ss}$. The output is fed back to the negative input through resistor $R_{gain}$ and to the negative input of amplifier 42d through resistor R. The output of amplifier 42d is fed back to its negative input through a resistor R and through an adjustable resistor $R_{tc}$ connected to the output of amplifier 42c to provide an output $I_{out}$ which can be adjusted at temperature T2. The temperature compensation trim at temperature T2 requires writing to temporary TC compensation registers 46 while the transducer is operating from the permanent memory written at T1 in permanent memory 48. The memory registers include a set of temporary/permanent TI registers and a set of temporary/permanent T2 registers with the calibration procedure writing to either set.

The pressure or acceleration transducer must be calibrated in order to meet different end use requirements as well as to correct for manufacturing variations in the capacitor values of the calibrated capacitor sensor. Calibration is typically conducted with a 5.0V supply voltage at 25° and at an elevated temperature for the TC cancellation trim. The programming sequence includes setting on-chip operating mode switches and entering coarse bias and gain DAC codes, fine bias and gain codes and temperature compensation DAC codes and after testing and iterating until the specification is met, storing the final switch settings in a reliable, non-volatile memory. Then, at an elevated temperature measuring the bias and gain errors and writing codes to the temporary registers for the bias and gain TC correction DAC's, iterating until the desired accuracy is reached, then storing in permanent memory and setting the lock-out bit to eliminate accidental programming during normal operations. The lock-out bit can be over-ridden with an unlock logic voltage of > $V_{DD}$ to SHLD connection 3.

Writing to the temporary registers 46 and programming the permanent memory is done through the three transducer connections VDD, OUT and VSS.

It will be understood that various external components can be added to customize the performance of the transducer to accommodate different applications.

As stated above, the circuit includes fault detectors. If the fault reporting feature has been enabled during calibration and a fault is detected during normal operation of the sensor, then the output of the sensor will be pulled low to the $V_{ss}$ or GND rail which will be interpreted by the ECU 14 as a fault condition. The default for the fault reporting switch $S_{FLT}$ in Fig. 6 is open, i.e., no fault reporting. A sensor pass/fail detector is included in the circuit. If the sensor capacitor $C_{VAR}$ or the reference capacitor $C_{REF}$ should become an open or a short then the voltage at the output of the coarse gain stage $V_B$ will be outside the normal operating range which is 50% +/- 20% of $V_{DD}$. The sensor fault detection 40 indicated in the block diagram of Fig. 6 comprises two threshold detectors (not shown). One detector will report a fault condition when $V_B$ < (50 - 40)% of $V_{DD}$ and the other will report a fault condition when $V_B$ > (50 + 40)% of $V_{DD}$. The reporting of a fault condition is delayed in order to prevent short pressure pulses or sudden acceleration shocks from being reported as failures. The circuit includes a self test 40a which is a parity check of the content of the permanent memory. If, during normal operation of the sensor, a parity failure is detected than this failure will activate the fault reporting feature, if the feature has been enabled during calibration, and will force the output of the circuit to the $V_{ss}$ rail.

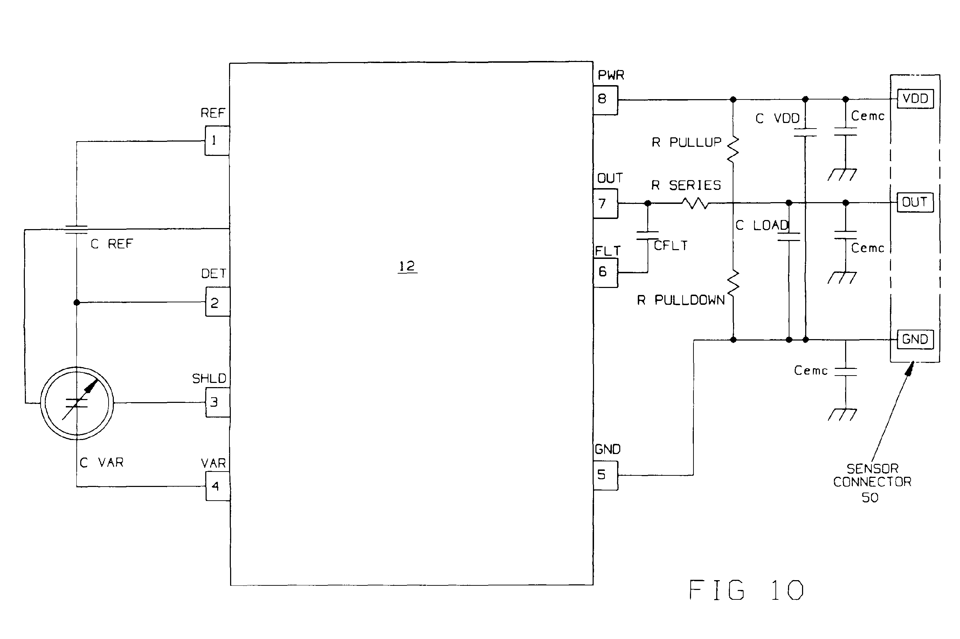

A typical application is shown in Fig 10. The only external components needed tor proper operation of the circuit are the calibrated capacitance sensing element $C_{VAR}$ and the reference capacitor $C_{REF}$. However, additional external components may be added in order to customize the performance of the transducer. As shown in the figure, such components can include external resistors $R_{SERIES}$, $R_{PULL\ UP}$, $R_{PULL\ DOWN}$ which make it possible to scale the output voltage range and to create clamping levels different from those provided by the circuits to accommodate certain failure detection schemes. The shielding pin SHLD provides a voltage source equal to the voltage at the DET pin and is used to guard the conductor runs connected to the DET input pin. This reduces leakage current into the sensitive DET pin. The external filter capacitor $C_{FLT}$ reduces the frequency response of the transducer. The EMC capacitors improve resistance to electro-magnetic noise coupled into the transducer case and cables to the transducer. The sensor connector 50 interconnects the circuit to the ECU 14 shown in Figs. 1, 3.

It should be understood that although a particular embodiment of the invention has been described by way of illustrating the invention, other embodiments and variations of the invention are possible. The invention includes all modifications and equivalents of the disclosed embodiments falling within the scope of the appended claims.

**Claims**

**1.** A variable capacitive transducer comprising:

a variable capacitor for providing an electrical signal responsive to the application of a mechanical stimulus being monitored and a reference capacitor connected to the variable capacitor to form a detect node;

an electric circuit comprising an input buffer having a positive input, a negative input and an output, the detect node being connected to a phase B switch, which is switchable between a first configuration, in which the detect node is connected to the negative input and a second configuration, in which the detect node is connected to the positive input, and an integrating capacitor connected to the positive input;

the reference capacitor being connected to a first phase A switch, which is switchable between a first configuration in which the reference capacitor is connected to a first reference voltage and a second configuration, in which the reference capacitor is connected to a second reference voltage;

the variable capacitor being connected to a second phase A switch, which is switchable between a first position, in which the variable capacitor is connected to the output of the input buffer and a second position, in which the variable capacitor is connected to a third reference voltage; and

a logic circuit for providing instructional cycles and connected to the respective phase switches to control the configuration of the phase switches so that for a first charge reference portion of each instructional cycle, phase A and phase B switches are in their respective first configurations, for a second charge redistribution portion of each instructional cycle the phase A switches are in their respective second configurations and for a third charge integration portion of each cycle the phase B switch is in its second configuration.

2. A variable capacitive transducer according to claim 1, in which the first reference voltage is analog ground.

3. A variable capacitive transducer according to claim 1 or claim 2, in which the third reference voltage is analog ground.

4. A variable capacitive transducer according to any preceding claim, in which the phase B switch is a single-pole, double-throw switch, which has a normally closed contact connected to the negative input and a normally open contact connected to the positive input.

5. A variable capacitive transducer according to any preceding claim, in which the first phase A switch is a single-pole, double-throw switch, which has a normally closed contact connected to the first reference voltage and a normally open contact connected to the second reference voltage.

6. A variable capacitive transducer according to any preceding claim, in which the second phase A switch is a single-pole, double-throw switch, which has a normally closed contact connected to the output of the input buffer and a normally open contact connected to the third reference voltage.

7. A variable capacitive transducer according to any preceding claim, further comprising an integrating resistor connected to the positive input of the input buffer.

8. A variable capacitive transducer according to any preceding claim, further comprising a bias and gain stage having an amplifier having a positive and a negative input and an output, means for providing controllable gain coupled between the output of the input buffer and the negative input and means for providing controllable bias coupled between a power supply voltage and the positive input of the bias and gain stage amplifier.

9. A variable capacitive transducer according to claim 8, in which the gain increases exponentially with a linear increase in a control signal.

10. A variable capacitive transducer according to claim 8 or claim 9, in which the bias increases linearly with a linear increase in a control signal.

11. A variable capacitive transducer according to any of claims 8 to 10, in which the means for providing controllable gain and/or the means for providing controllable bias comprises a digital-to-analog converter.

12. A variable capacitive transducer according to any of claims 8 to 11, in which the gain of the gain stage is from 1.0 to 9.3 with a resolution at the output voltage of the gain stage from 0.6% to 2.8% of the supply voltage.

13. A variable capacitive transducer according to any of claims 8 to 12, further comprising a fine bias and gain stage having an amplifier having a positive and a negative input and an output, means for providing controllable fine gain coupled between the output of the coarse bias and gain stage amplifier and the negative input of the fine bias and gain stage amplifier and means for providing controllable fine bias coupled between the power supply voltage and the negative input of the fine bias and gain stage amplifier and a reference voltage coupled to the positive input of the fine bias and gain amplifier.

14. A variable capacitive transducer according to claim 13, in which the means for providing controllable fine gain and/or the means for providing controllable fine bias comprises a digital-to-analog converter.

15. A variable capacitive transducer according to claim 13 or claim 14, in which the resolution of the fine bias stage reduces an output voltage of the bias stage of 2.8% of the supply voltage to approximately 0.1%.

FIG 1

FIG 2

EP 1 106 981 A2

FIG 3

SWITCHES SHOWN IN
REFERENCE PHASE POSITION

FIG 4

T SAMPLE = 16 us

T REF = 6.0 us    T COMP = 6.0 us    T INT = 4.0 us

CLK

Φ Anc

Φ Ano

t BBM    t BBM    SWITCH CLOSED ON LOGIC H

Φ Bnc

Φ Bno

Vref
REF
0

Vf
VAR
0

Vdd
Vf
DET
0

Vf

REFERENCE
PHASE

REDISTRIBUTION
PHASE

INTEGRATING
PHASE

EP 1 106 981 A2

FIG 5

EP 1 106 981 A2

FIG 6

EP 1 106 981 A2

FIG 7

VF  Rgin  R 15  Rg1  Rgf  VB

G 15  G 14  G 1  G 0

COARSE GRAIN
4 BIT DAC

Sg15  Sg14  Sg1  Sg0

Vb (COARSE)

30A

COARSE BIAS
8 BIT DAC  VDD  Rbb  VSS

256Rb  110Rb

FIG 8

RFIN  RFF

VB  VG

GHI
GLO  RGDAC

VDD

RBDAC

VSS  VCM  32a

FIG 9

VDD

ERROR CORRECTION AT T2

42

0 ADJUSTMENT AT T1

Rlin  Rgain  Iout

Rtc

Rt1  PTC  NTC

42c  R  R

Rlin

Rtc  42d

Vcm

VSS

FIG 10